# FASCICULE DE BREVET EUROPEEN

(11) **EP 1 722 992 B1**
(45) Date de publication et mention de la délivrance du brevet: **11.03.2009**
(21) Numéro de dépôt: 05717650.5
(22) Date de dépôt: 04.01.2005
(51) Int. Cl.: B60J 1/20

(54) **DISPOSITIF DE FIXATION D'UN SIEGE ENFANT**
VORRICHTUNG ZUM BEFESTIGEN EINES KINDERSITZES
DEVICE FOR FIXING A CHILD SEAT

(30) Priorité: 02.03.2004 FR 0402167
(43) Date de publication de la demande: 22.11.2006
(73) Titulaire: Renault SAS, 92100 Boulogne Billancourt (FR)
(72) Inventeur: LAURIE, John, F-78000 VERSAILLES (FR)
(86) Numéro de dépôt international: PCT/FR2005/050003
(87) Numéro de publication internationale: WO 2005/084976

(56) Documents cités:
- EP-A- 0 377 929
- US-A1- 2002 104 190
- PATENT ABSTRACTS OF JAPAN vol. 1997, no. 05, 30 mai 1997 (1997-05-30) -& JP 09 011847 A (SUZUKI MOTOR CORP), 14 janvier 1997 (1997-01-14)
- PATENT ABSTRACTS OF JAPAN vol. 0092, no. 79 (M-427), 7 novembre 1985 (1985-11-07) -& JP 60 121112 A (TOYOTA TSUSHO KK), 28 juin 1985 (1985-06-28)

## Description

L'invention concerne un dispositif de fixation d'un siège enfant sur un siège de véhicule automobile comprenant au moins un élément supérieur d'accrochage du siège enfant qui s'étend depuis le haut du dossier du siège enfant pour coopérer au niveau de l'élément de structure du véhicule avec un élément d'ancrage qui comporte un anneau pivotant autour d'un support intégré dans une platine fixé à l'élément de structure par des moyens de fixation.

Lors d'un choc à l'avant du véhicule, le siège enfant tend à pivoter, vers l'avant, autour de ces points inférieurs de fixation, en comprimant la mousse de l'élément d'assise du siège adulte. Ce pivotement modifie l'orientation du siège enfant par rapport au siège d'adulte ce qui gêne le fonctionnement des moyens de retenue de l'enfant dans son siège. Il est connu de prévoir un élément supérieur afin de limiter le pivotement du siège enfant. Il est également connu d'utiliser un habillage spécifique dissimulant l'élément d'ancrage lorsqu'il ne sert pas.

Actuellement, le rideau pare-soleil posé problème au niveau de son accrochage car il est nécessaire de disposer de moyens d'accrochage et de retenue spécifiques et de prévoir une installation particulière au niveau du garnissage et de la carrosserie.

Afin de pallier ces inconvénients, l'invention a pour objet de minimiser le nombre de pièces afin d'optimiser le temps de montage du véhicule et de simplifier l'aménagement du véhicule.

Le document US2002/104190décrit un dispositif de fixation de siège enfant mais qui est situé soit sur le plancher du véhicule soit sur la tablette arrière.

A cet effet, l'invention propose une platine qui comporte des moyens de retenue d'un pare-soleil.

Selon une autre caractéristique, les moyens de retenue d'un pare-soleil comportent une paroi parallèle à l'axe vertical de la platine et en ce que les moyens d'accrochage du pare-soleil comportent un crochet coopérant avec la paroi.

Selon une autre caractéristique de l'invention, le dispositif comporte au moins un moyen de renfort qui fait corps avec la face supérieure et qui est situé au droit de moyens de clipsage du couvercle et dispose d'une tête de retenue qui est reçue par un orifice de l'élément de la structure de façon à ce que la platine soit immobilisé contre le garnissage

Selon une autre caractéristique de l'invention, le dispositif comporte au moins un moyen de renfort qui est situé au droit de moyens de retenue du pare-soleil et qui est en saillie, orientée de façon parallèle à la face supérieure laissant un espace entre la languette et la platine de façon à ce que la platine soit immobilisée contre le garnissage

D'autres caractéristiques et avantages de l'invention ressortiront plus clairement de la description qui va suivre d'un mode de réalisation donné à titre d'exemple non limitatif et représenté aux figures annexées suivantes.
La figure 1 représente une vue en perspective du dispositif selon l'invention où l'élément d'ancrage du siège enfant est en position d'utilisation.
La figure 2 représente une vue en coupe transversale de la platine avec l'élément d'ancrage du siège enfant en position de rangement.
La figure 3 représente une vue en coupe longitudinale de la platine pourvu d'un moyen d'accrochage de pare-soleil et l'élément d'ancrage du siège enfant est en position d'utilisation.

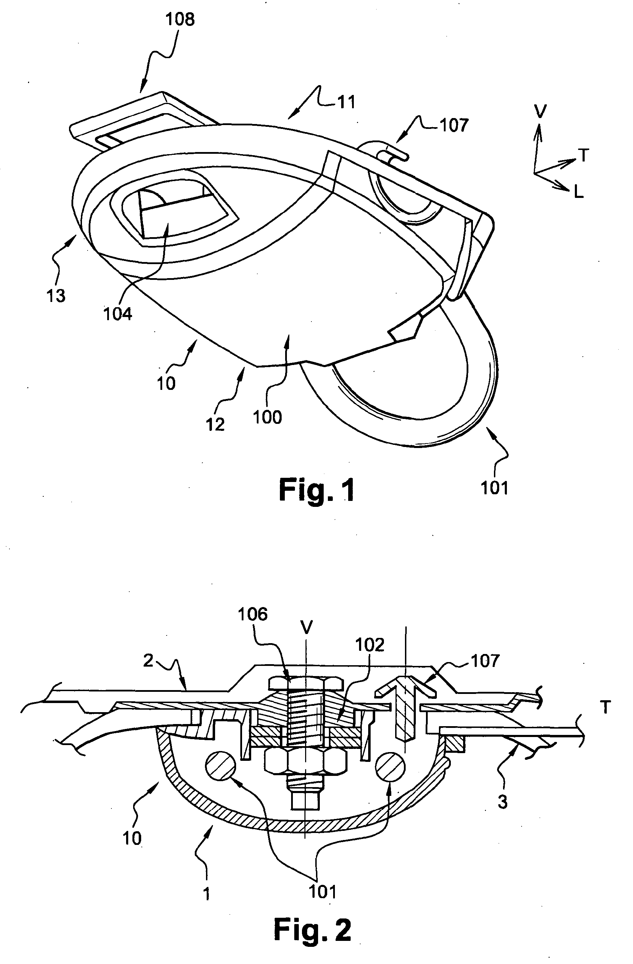

L'invention est à présent décrite en référence aux figures 1. 2 et 3.

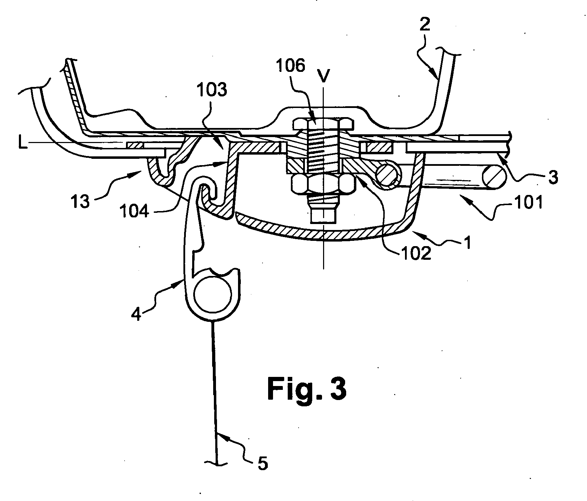

Dans la description qui suit, nous prendrons à titre non limitatif une orientation longitudinale, vertical et transversale indiquée par le trièdre L,V,T des figures 1,2,3.

Le dispositif de fixation d'un siège enfant selon l'invention comprend une platine 1, fixée à l'arrière des sièges du véhicule, sur l'élément de structure 2. La platine 1 comporte un couvercle 100 permettant l'accès au moyen d'ancrage qui comporte un anneau 101 et un support 102.

La platine 1 a deux faces de forme différente. L'une de ses faces, la face supérieure 11 est sensiblement plane et est dimensionnée de façon à recevoir des moyens de fixation 106 de l'anneau 101 ou est pourvue de moyens de renfort 107,108 de la platine 1 à l'élément de structure 2. L'autre face, la face inférieure 10 est de forme bombée.

La platine 1 comporte deux parties : une partie principale 12 où se situe le moyen d'ancrage 101 et une partie 13 où se situe un moyen de retenue 103. Sur la face inférieure 10, la partie 12 dispose d'un couvercle 100. Ce couvercle 100 dispose d'une charnière parallèle à l'axe longitudinal de la platine 1. Pour accéder à l'élément d'ancrage du siège enfant, le couvercle 100 s'ouvre par des moyens de clipsage situé sur un axe parallèle à la charnière de l'autre côté de l'axe longitudinal de la platine. L'élément d'ancrage se compose de l'anneau 101 pivotant autour du support 102 inséré dans un logement. Ce support 102 est évidé de façon à laisser passer le corps d'un moyen de fixation 106. Ce moyen de fixation 106 est une vis filetée soudée de façon perpendiculaire à l'élément de structure 2 tel qu'une traverse. Ceci permet non seulement la fixation du support 102 dans son logement mais aussi la fixation de la platine 1 à l'élément de structure 2. La fixation de l'ensemble permet de participer à la tenue du garnissage 3 de l'élément de structure 2. Le soudage repose sur le support 102. Le corps du moyen de fixation 106 traverse la platine par le support 102.

L'anneau 101 est soit en position de rangement soit en position d'utilisation. La paroi située à l'extrémité de la partie 12, parallèle à l'axe vertical de la platine 1 comporte deux encoches qui sont destinées à recevoir l'anneau 101 en position d'utilisation. Le couvercle 100 comporte des embrèvements au droit des encoches pour former ainsi deux trous quand le couvercle 100 est fermé. Ces trous permettent le pivotement de l'anneau 101 quand il est en position d'utilisation. Quand le couvercle 100 est ouvert, l'anneau 101 peut pivoter entre 0 et 180° pour permettre soit le rangement soit l'utilisation. Quand le couvercle 100 est fermé et l'anneau 101 est en utilisation, l'anneau 101 peut pivoter environ entre 0 et 90°. La platine 1 étant souvent sollicité par l'ouverture et la fermeture du couvercle 100, un moyen de renfort 107 est prévu sur la face supérieure 11 correspondant aux moyens de clipsage du couvercle 100 sur la face inférieure 10. Ces moyens de clipsage comprennent deux encoches sur la platine 1 et deux lames élastiques sur le couvercle. Quand le couvercle est fermé, les lames élastiques coopèrent avec les encoches, Le moyen de renfort 107 fait corps avec la face supérieure 11. Le moyen de renfort 107 comporte un corps surmonté d'une tête de retenue. La tête de retenue est insérée dans l'élément de structure 2 de façon à y être bloquée. Ce moyen de renfort 107 est alors solidaire à l'élément de structure 2.

La partie 13 est évidée de manière à former une paroi 104 parallèle à l'axe vertical de la platine 1. Cette paroi 104 est destinée à recevoir un moyen d'accrochage 4. Le moyen d'accrochage 4 du rideau pare-soleil 5 est constitué d'un crochet 40. Ce crochet 40 est relié à une extrémité libre d'un rideau pare-soleil 5. Ce crochet 40 se loge dans le moyen de retenue 103 . Quand le rideau pare-soleil 5 est utilisé, le moyen de retenue 103 subit une tension. Afin de maintenir un contact avec la garniture 3, un moyen de renfort 108 reçoit la garniture 3. Pour cela, une languette évidée sur la face supérieure 11 et sur la partie 13 est en saillie parallèle à la face supérieure 11. Ce moyen de renfort 108 s'insère entre l'élément de structure 2 et le garnissage 3.

## Revendications

1. Dispositif de fixation d'un siège enfant sur un siège de véhicule automobile, ledit dispositif comprenant au moins un moyen supérieur d'accrochage du siège enfant à un élément de structure du véhicule, moyen qui s'étend depuis le haut du dossier du siège enfant pour coopérer au niveau de l'élément de structure (2) du véhicule avec un élément d'ancrage qui comporte un anneau (101) pivotant autour d'un support (102) intégré dans une platine (1) fixé à l'élément de structure (2) par des moyens de fixation (106), **caractérisé en ce que** la platine (1) comporte des moyens de retenue d'un pare-soleil (103).

2. Dispositif de fixation d'un siège enfant selon la revendication 1 **caractérisé en ce que** les moyens de retenue d'un pare-soleil (103) comportent une paroi (104) parallèle à l'axe vertical de la platine (1) et **en ce que** les moyens d'accrochage (4) du pare-soleil comportent un crochet (40) coopérant avec la paroi (104).

3. Dispositif de fixation d'un siège enfant selon l'une des revendications précédentes, **caractérisé en ce que** le dispositif comporte au moins un moyen de renfort (107) qui fait corps avec la face supérieure (11) et qui est situé au droit de moyens de clipsage du couvercle (100) et dispose d'une tête de retenue qui est reçue par un orifice de l'élément de la structure (2) de façon à ce que la platine (1) soit immobilisée contre le garnissage (3).

4. Dispositif de fixation d'un siège enfant (1) selon l'une des revendications précédentes, **caractérisé en ce que** le dispositif comporte au moins un moyens de renfort (108) qui est situé au droit de moyens de retenue du pare-soleil (103) et qui est en saillie, orientée de façon parallèle à la face supérieure (11) laissant un espace entre la languette et la platine (1) de façon à ce que la platine (1) soit immobilisée contre le garnissage (3).

## Claims

1. Device for fixing a child seat to a motor vehicle seat, said device comprising at least one upper means for hooking the child seat to a structural part of the vehicle, which means extends from the top of the backrest of the child seat to engage at the structural part (2) of the vehicle with an anchor part that comprises a ring (101) pivoting about a bracket (102) built into a plate (1) fixed to the structural part (2) by fixing means (106), said device being **characterized in that** the plate (1) comprises retention means for a sun screen (103).

2. Device for fixing a child seat according to Claim 1, **characterized in that** the retention means for a sun screen (103) comprise a wall (104) parallel to the vertical axis of the plate (1) and **in that** the hook means (4) of the sun screen comprise a hook bracket (40) engaging with the wall (104).

3. Device for fixing a child seat according to one of the preceding claims, **characterized in that** it comprises at least one reinforcing means (107) which forms part of the upper face (11) and which is situated adjacent to clip means belonging to the cover (100) and has a retaining head received in a hole in the structural part (2) in such a way that the plate (1) is immobilized against the trim (3).

4. Device for fixing a child seat (1) according to one of the preceding claims, **characterized in that** it comprises at least one reinforcing means (108) which is situated adjacent to means of retention of the sun screen (103) and which projects parallel to the upper face (11), leaving a space between the tongue and the plate (1) so that the plate (1) is immobilized against the trim (3).

## Patentansprüche

1. Vorrichtung zur Befestigung eines Kindersitzes auf einem Kraftfahrzeugsitz, wobei die Vorrichtung mindestens ein oberes Mittel zum Anbringen des Kindersitzes an einem Strukturelement des Fahrzeugs aufweist, wobei sich dieses Mittel von der Oberseite der Rückenlehne des Kindersitzes aus erstreckt, um am Strukturelement (2) des Fahrzeugs mit einem Verankerungselement zusammenzuwirken, das einen Ring (101) aufweist, der um einen Träger (102) schwenkbar ist, der in einer Grundplatte (1) integriert ist, welche durch Befestigungsmittel (106) an dem Strukturelement (2) befestigt ist, **dadurch gekennzeichnet, dass** die Grundplatte (1) Haltemittel für eine Sonnenblende (103) aufweist.

2. Vorrichtung zur Befestigung eines Kindersitzes nach Anspruch 1, **dadurch gekennzeichnet, dass** die Haltemittel für eine Sonnenblende (103) eine Wand (104) parallel zur Vertikalachse der Grundplatte (1) aufweist und dass die Verankerungsmittel (4) der Sonnenblende eine Haken (40) aufweisen, der mit der Wand (104) zusammenwirkt.

3. Vorrichtung zur Befestigung eines Kindersitzes nach einem der vorhergehenden Ansprüche, **dadurch gekennzeichnet, dass** die Vorrichtung mindestens ein Verstärkungsmittel (107) aufweist, das einstückig mit der Oberseite (11) ausgebildet ist und das sich an den Mitteln zum Festklemmen des Deckels (100) befindet und einen Haltekopf aufweist, der durch eine Öffnung des Strukturelements (2) aufgenommen wird, so dass die Grundplatte (1) gegen die Verkleidung (3) festgelegt wird.

4. Vorrichtung zur Befestigung eines Kindersitzes (1) nach einem der vorhergehenden Ansprüche, **dadurch gekennzeichnet, dass** die Vorrichtung mindestens ein Verstärkungsmittel (108) aufweist, das sich an den Haltemitteln für die Sonnenblende (103) befindet, vorragt und parallel zur Oberseite (11) ausgerichtet ist, wobei zwischen der Zunge und der Grundplatte (1) ein Raum verbleibt, so dass die Grundplatte (1) gegen die Verkleidung (3) festgelegt wird.
